# EUROPÄISCHE PATENTSCHRIFT

(11) **EP 1 139 848 B1**
(45) Veröffentlichungstag und Bekanntmachung des Hinweises auf die Patenterteilung: **29.12.2004**
(21) Anmeldenummer: 00904883.6
(22) Anmeldetag: 07.01.2000
(51) Int. Cl.: A47L 9/14, A47L 9/10

(54) **STAUBFILTERBEUTEL FÜR EINEN STAUBSAUGER**
DUST FILTER BAG FOR A VACUUM CLEANER
FILTRE A POUSSIERE DESTINE A UN ASPIRATEUR

(30) Priorität: 07.01.1999 DE 19900209; 29.07.1999 DE 19935355
(43) Veröffentlichungstag der Anmeldung: 10.10.2001
(60) Teilanmeldung: 04104031.2
(73) Patentinhaber: Vorwerk & Co. Interholding GmbH, 42275 Wuppertal (DE)
(72) Erfinder: MEYER, Frank, D-58675 Hemer (DE); HEIDER, Uwe, D-50354 Hürth (DE)
(74) Vertreter: Müller, Enno, Dipl.-Ing.
(86) Internationale Anmeldenummer: PCT/EP2000/000083
(87) Internationale Veröffentlichungsnummer: WO 2000/040134

(56) Entgegenhaltungen:
- DE-A- 19 531 343
- DE-C- 19 615 209
- DATABASE WPI Section Ch, Week 199415 Derwent Publications Ltd., London, GB; Class D22, AN 1994-123352 XP002138789 -& JP 06 070871 A (MATSUSHITA ELEC IND CO LTD), 15. März 1994 (1994-03-15)
- PATENT ABSTRACTS OF JAPAN vol. 017, no. 409 (C-1091), 30. Juli 1993 (1993-07-30) & JP 05 084191 A (MATSUSHITA ELECTRIC IND CO LTD), 6. April 1993 (1993-04-06)
- PATENT ABSTRACTS OF JAPAN vol. 011, no. 133 (C-418), 25. April 1987 (1987-04-25) & JP 61 271013 A (OJI SEITAI KK), 1. Dezember 1986 (1986-12-01)

## Beschreibung

Die Erfindung betrifft einen Staubfifterbeutel nach den Merkmalen des Oberbegriffs des Anspruches 1.

Derartige Staubfilterbeutel für Staubsauger sind in den verschiedensten Ausführungsformen bekannt. Diese dienen zur Ausfilterung von durch den Saugstrom in den Filterbeutel transportierten Schmutzpartikeln. Diesbezüglich ist es bekannt, Filterbeutel mehrlagig auszubilden, zur Verbesserung der Ausfilterung von kleineren Staubpartikeln. Kleinststaubpartikel, welche noch durch den Filterbeutel nach außen treten, werden verschiedentlich durch nachgeschaltete Feinststaubfilter abgefangen. Um die typischen Gerüche beim Staubsaugen zu unterdrücken, ist es weiter bekannt, dem Filterbeutel nachgeschaltet vor oder hinter dem Sauggebläse einen Geruchsfilter, wie bspw. einen Aktivkohlefilter, einzusetzen. Die geruchsabgebenden Stoffe durchtreten im Zuge des Saugvorganges den Aktivkohlefilter. Ohne Gebläsebetrieb, d. h. bei Nichtinbetriebnahme des Staubsaugers, erreichen jedoch die durch Zersetzung in dem Staubfilterbeutel geruchsabgebenden Stäube/Stoffe nicht den Geruchsfilter, so daß sich im Stillstand des Geräts im Laufe der Zeit unangenehm empfundene, auch nach außen tretende Gerüche bilden. Diese treten häufig insbesondere dann unangenehm auf, sobald nach einer längeren Stillstandsphase das Gerät wieder in Betrieb genommen wird und hierbei ein relativ hoher Anfangsgeruchsschwall erreicht wird.

Aus der DE 196 15 209 C1 ist ein Staubfilterbeutel mit einer Lage aus Filterpapier bekannt, die mit Adsorberpartikeln versehen ist. Weiter ist eine Decklage mit Partikelfiltereigenschaften vorgesehen. Die Adsorberpartikel kömmen bspw. in das Filterpapier imprägniert sein.

Im Hinblick auf den zuvor beschriebenen Stand der Technik wird eine technische Problematik der Erfindung darin gesehen, einen Staubfilterbeutel der in Rede stehenden Art anzugeben, welcher hinsichtlich der Staub- und/oder Geruchsfiltereigenschaften verbessert ist.

Diese Problematik ist zunächst und im wesentlichen beim Gegenstand des Anspruchs 1 gelöst. Die Lage aus einem Adsorptionsmaterial kann Aktivkohle oder Zeolithe aufweisen. Als geruchsadsorbierendes Material kommt nicht nur Aktivkohle in Frage, sondern alle Materialien, welche bei einer sehr hohen Porosität eine sehr hohe (innere) Oberfläche bieten. Dies sind zum einen auch sogenannten Molekularsiebe und Zeolithe aber auch dünne Fasern mit Durchmessern in der µm-Skala, insbesondere wenn diese verascht werden können oder wenn ihre (innere) Oberfläche durch andere Prozesse, bspw. mikroskopische Blasenbildung, deutlich vergrößert werden kann. Insbesondere die Geruchsadsorption an solchen dünnen Fasern ist prädestiniert für die Kombination mit einem Partikelfilter, da die geruchsadsorbierenden Fasern selbst die Partikelabscheidung des Gesamtfilters auch für Partikel im µm-Bereich noch signifikant erhöhen können. Das Adsorptionsmaterial ist lose zwischen zwei Lagen des Staubbeutels angeordnet, vorzugsweise zwischen einer inneren Vlieslage und einer äußeren, hochwertigen Partikelfilterlage. Die losen Adsorptionsteilchen können hierbei reibschlüssig zwischen den beiden Beutellagen gehalten sein. Es ist eine jederzeit optimal funktionierende Geruchsfilterung gegeben, welche unbewußt von Benutzer bei jedem Staubbeutelwechsel hygienisch und lageorientiert ausgetauscht wird. Zudem kann bei einer Anordnung des Adsorptionsmaterials zwischen zwei Filterlagen vorgesehen sein, daß die Adsorption bodenseitig des Filterbeutels nicht vorgesehen ist, dies insbesondere bei derartigen Filterbeuteln, welche bodenseitig eine ausgesteifte Lage, bspw. aus einem Pappe/Papier-Werkstoff bestehenden Beutelboden aufweist.

Nachstehend ist die Erfindung anhand der beigefügten Zeichnung, welche ein Ausführungsbeispiele darstellt, näher erläutert. Es zeigt:
- Fig. 1: einen Staubsauger in Form eines Handstaubsaugers in Perspektive;
- Fig. 2: einen erfindungsgemäßen Filterbeutel in einer perspektivischen Einzeldarstellung;
- Fig. 3: eine Schnittdarstellung.

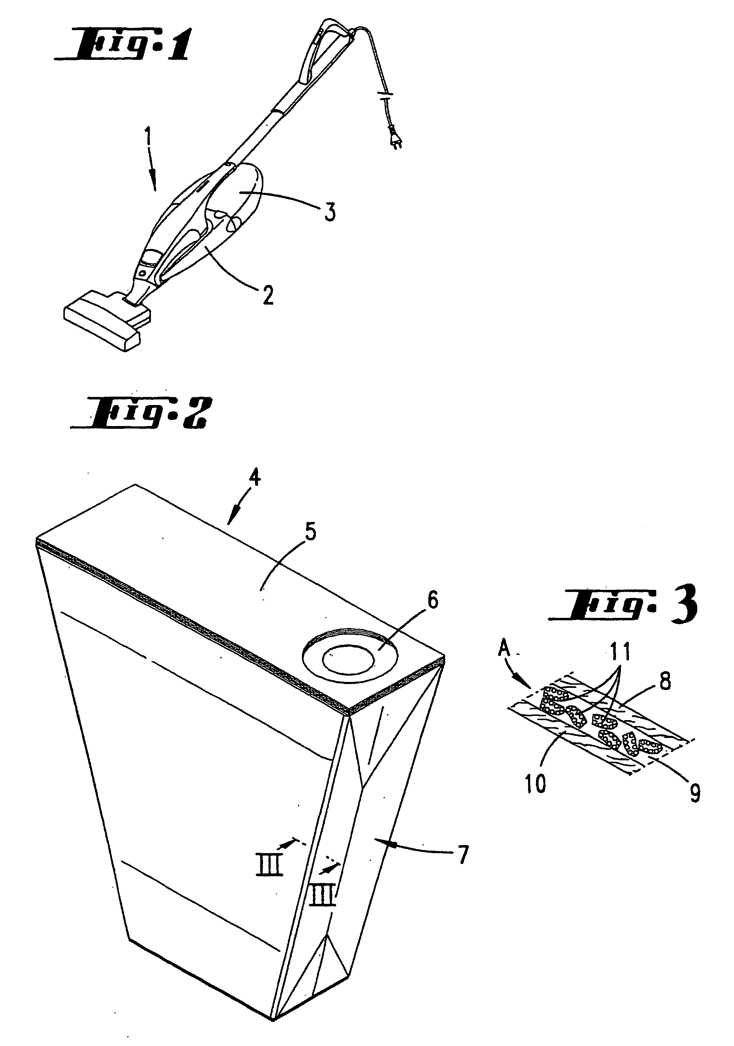

Dargestellt und beschrieben ist zunächst mit Bezug zu Fig. 1 ein Staubsauger 1 mit einem Motorgehäuse 2 und einer an diesem schwenkbar angeordneten Kassette 3 zur Aufnahme eines in Fig. 2 in einer Einzeldarstellung gezeigten Filterbeutels 4.

Der Filterbeutel 4 besitzt eine Halteplatte 5, bspw. aus einem Pappe/Papier-Werkstoff mit einer Stutzenöffnung 6. Unterseitig der Halteplatte 5 ist an dieser zur Bildung des Filterbeutels 4 ein Staubbeutel 7 angeordnet, bspw. angeklebt.

Dieser Staubbeutel 7 besteht in dem dargestellten Ausführungsbeispiel aus drei übereinander angeordneten Lagen 8 bis 10, wobei die innere Lage 8 und die äußere Lage 10 bspw. übliche Papierfilterlagen zur Ausfiltrierung des mit dem Saugluftstrom in den Filterbeutel 4 transportierten Schmutz. Zwischen diesen beiden Staubfilterlagen 8 und 10 ist eine Geruchsfilterlage 9 angeordnet, welche ein Adsorptionsmaterial A, in dem gezeigten Ausführungsbeispiel Aktivkohle, aufweist. Darüber hinaus sind auch andere Materialien zur Geruchsadsorption einsetzbar, welche bei einer sehr hohen Porosität eine sehr hohe (innere) Oberfläche bieten. Dies können zum einen sogenannten Molekularsiebe und Zeolithe aber auch dünne Fasern, insbesondere wenn diese verascht werden können oder wenn ihre (innere) Oberfläche durch andere Prozesse, wie bspw. mikroskopische Blasenbildung, deutlich vergrößert werden kann. Werden dünne Fasern als Adsorptionsmaterial A eingesetzt, so ergibt sich hieraus in Kombination mit den Partikelfilterlagen 8 und 10 der Vorteil, daß die geruchsadsorbierenden Fasern selbst die Partikelabscheidung des Gesamtfilters für Partikel im µm-Bereich signifikant erhöhen können.

In dem gezeigten Ausführungsbeispiel ist - jedoch nicht dargestellt - eine bodenseitige Anordnung der Adsorptionslage nicht vorgesehen.

Durch die erfindungsgemäße Ausgestaltung ergeben sich Vorteile für den Benutzer. Der von Feinststaub durchsetzte Geruchsfilter in Form einer Adsorptionslage 9 innerhalb des Filterbeutels 4 wird zum Wechseln desselben nicht mehr gefaßt. Vielmehr wird in üblicher Weise der Gesamtfilterbeutel 4 mitsamt dem Geruchsfilter bei füllgradbedingtem Wechsel ausgetauscht. Der Benutzer muß zum Wechsel beider Filter (Staub- und Geruchsfilter) lediglich nur auf einen Indikator (Filterwechselanzeige) achten.

Weiter erreichen zufolge dieser Ausgestaltung die durch Zersetzung im Staubbeutel 7 entstehenden Gerüche ohne , Schwierigkeiten die geruchsadsorbierende Substanz in der Mittellage 9, werden demzufolge hier abgefiltert. Auf diese Weise läßt sich der als unangenehm empfundene Anfangsgeruchsschwall bei Inbetriebnahme des Staubsaugers 1, insbesondere nach längeren Standzeiten, deutlich reduzieren.

In der Fig. 3 ist die erfindungsgemäß Ausgestaltung dargestellt, bei welcher die Mittellage (Geruchsfilterlage) aus frei beweglichen Adsorptionsteilchen 11 besteht, wobei bevorzugt die innere Lage 8 eine Vlieslage und die äußere Lage 10 ein hochwertiger Partikelfilter ist.

## Patentansprüche

1. Staubfilterbeutel (4) für einen Staubsauger (1) mit einer Halteplatte (5) und einem Staubbeutel (7), wobei der Staubbeutel (7) mehrlagig ist und eine Lage (9) aus einem Adsorptionsmaterial (A), wie Aktivkohle oder Zeolithe, aufweist und das Adsorptionsmaterial (A) zwischen zwei Lagen (8 und 10) des Staubbeutels (7) angeordnet ist, **dadurch gekennzeichnet, daß** diese Mittellage (9) aus frei beweglichen Adsorptionsteilchen (11) besteht.

2. Staubfilterbeutel nach Anspruch 1, **dadurch gekennzeichnet, dass** die Lagen (8, 10) aus einer inneren Vlieslage und einer äußeren Partikelfilterlage bestehen.

3. Filterbeutel nach Anspruch 2, **dadurch gekennzeichnet, dass** das Adsorptionsmaterial reibschlüssig zwischen den Lagen (8, 10) gehalten ist.

4. Filterbeutel nach einem der Ansprüche 1 bis 3, **dadurch gekennzeichnet, dass** die Adsorption bodenseitig des Filterbeutels nicht vorgesehen ist.

## Claims

1. Dust-filter bag (4) for a vacuum cleaner (1), having a retaining plate (5) and a dust bag (7), the dust bag (7) being multi-layered and having a layer (9) made of an adsorption material (A), such as activated carbon or zeolites, and the adsorption material (A) being disposed between two layers (8 and 10) of the dust bag (7), **characterized in that** this central layer (9) comprises freely movable adsorption particles (11).

2. Dust-filter bag according to Claim 1, **characterized in that** the layers (8, 10) comprise an inner nonwoven layer and an outer particle filter layer.

3. Filter bag according to Claim 2, **characterized in that** the adsorption material is retained with a friction fit between the layers (8, 10).

4. Filter bag according to one of Claims 1 to 3, **characterized in that** the adsorption is not provided at the base of the filter bag.

## Revendications

1. Sac filtre à poussière (4) pour un aspirateur (1), comprenant une plaque de support (5) et un sac à poussière (7), dans lequel le sac à poussière (7) est multi-couches et présente une couche médiane (9) constituée d'un matériau d'adsorption (A), tel que du charbon actif ou de la zéolithe, et le matériau d'adsorption (A) est disposé entre deux couches (8 et 10) du sac à poussière (7), **caractérisé en ce que** cette couche médiane (9) est constituée de particules d'adsorption (11) se déplaçant librement.

2. Sac filtre à poussière selon la revendication 1, **caractérisé en ce que** les couches (8,10) consistent en une couche interne de matériau non tissé et une couche externe de filtre à particules.

3. Sac filtre selon la revendication 2, **caractérisé en ce que** le matériau d'adsorption est maintenu par frottement entre les couches (8,10).

4. Sac filtre selon l'une des revendications 1 à 3, **caractérisé en ce que** l'adsorption n'est pas disposée sur la face du fond du sac filtre.
